# EUROPEAN PATENT APPLICATION

(11) **EP 3 819 235 A2**
(43) Date of publication of application: **12.05.2021**
(21) Application number: 20203599.4
(22) Date of filing: 23.10.2020
(51) Int. Cl.: B65G 15/62, B65G 21/06, B65G 39/12

(54) **BELT CONVEYOR STAND SYSTEM WITH EASY MAINTENANCE**

(30) Priority: 05.11.2019 KR 20190140367
(71) Applicant: Lautec Co., Ltd., Gwangju 62465 (KR)
(72) Inventor: SEO, Seok Ho, 61092 Gwangju (KR)
(74) Representative: Keilitz Haines & Partner Patentanwälte PartGmbB

(57) **Abstract**

Belt conveyor stand system with easy maintenance of this invention comprises: 1st inclined stand unit comprising two triangular inclined stands that is installed at regular intervals on bottom of transporting conveyor belt, perpendicularly attaches many impact bars on one side of rear surface and opposite side separated by specific distance from one side, and maintains inclination angle from inner side to outer side; 2nd inclined stand unit comprising two inclined stands that is separated at regular intervals while facing the 1st inclined stand unit and is attached to base stand unit; base stand unit comprising two base stands attached to face the 1st inclined stand unit and the 2nd inclined stand unit; 1st roller unit attached to side of base stand on one side of the base stand unit; 2nd roller unit attached horizontally on side of base stand on opposite side of the base stand unit; and many impact bars installed on the 1st inclined stand unit and 2nd inclined stand unit.

## Description

### [Technical Field]

The present invention relates to a belt conveyor stand system that transports a heavy weight like coal from one place to another. The belt conveyor stand system that transports a heavy weight needs to be repaired easily because the driving part often shows frequent breakdown during operation. Accordingly, the present invention has improved roller unit and base stand structure, main components of belt conveyor stand system, to make roller replacement and base stand maintenance easy.

### [Background Art]

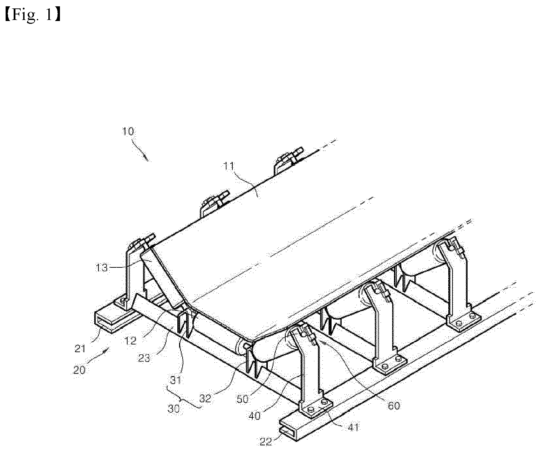

The related art of this invention is presented in the registered patent no. 10-0960998 (announced on June 3, 2010) of the Republic of Korea. Fig. 1 is a block diagram of the conventional conveyor roller stand. In Fig. 1, the conventional conveyor roller stand supports rotation of central roller (12) supporting bottom of conveyor belt (11) and side rollers (13) supporting both ends of conveyor belt (11). Conveyor roller stand (10) is furnished with frame (20), main bracket (30) that is installed on frame (20) to support both ends of central roller (12) and one end of side rollers (13) for rotation, side brackets (40) installed on frame (20) in position corresponding to other end of side rollers (13), restraining bumps (50) protruding on top surface of side brackets (40), and restraining units (60) installed detachably on top surface of side brackets (40). Frame (20) is furnished with 1st and 2nd supporting members (21,22) and many third supporting members (23) connected between 1st and 2nd supporting members (21,22). 1st and 2nd supporting members (21,22) are located underneath conveyor belt (11), extending in direction parallel to moving direction of conveyor belt (11) and installed to be mutually separated in response to width of conveyor belt (11). Many side brackets (40) are installed and fixed on top surface of 1st and 2nd supporting members (21,22). Third supporting members (23) are installed orthogonal to 1st and 2nd supporting members (21,22) by fixing both ends on mutually facing surfaces of side brackets (40) to be described later installed on top surface of 1st and 2nd supporting members (21,22), extending to length that corresponds to separation distance of 1st and 2nd supporting members (21,22). Many third supporting members (23) are installed at mutually separated position along longitudinal direction of 1st and 2nd supporting members (21,22). Main bracket (30) is installed in center of top surface of third supporting members (23). Main bracket (30) is installed in center of frame (20) to support both ends of central roller (12) and one end of side rollers (13), and are furnished with 1st and 2nd main members (31,32). 1st and 2nd main members (31,32) are welded and fixed by mutually separating by length that corresponds to central roller (12) in center of top surface of third supports. Both ends of central roller (12) are inserted into top side of mutually facing surface of 1st and 2nd main members (31,32), and 1st insertion groove (33) is each formed to support rotation. Top side of surface facing 1st and 2nd supporting members (21,22) of 1st and 2nd main members (31,32) is formed with inclination (35) that is inclined at prescribed angle to support side rollers (13) askew. It is desirable for 2nd insertion groove (34) to be each formed to support rotation at one end of side rollers (13). Side brackets (40) are formed with flange member (41) to be fixed and installed using fixing method such as bolt and nut on top surface of 1st and 2nd supporting members (21,22) in position facing 1st and 2nd main members (31,32). Also, top of side brackets (40) is formed at angle corresponding to inclination (35) of 1st and 2nd main members (31,32) to support side rollers (13) askew. Here, it is desirable for side brackets (40) to be formed higher than main bracket (30) so that one end of side rollers (13) is supported at higher position than the other end. Restraining bumps (50) protrude from top front side of side brackets (40). Illustrated example explains structure where retraining bumps (50) are formed on top front side of side brackets (40), but positions of restraining bumps (50) are not limited to illustrated example and may be formed on top rear side of side brackets (40) according to removal direction of side rollers (13). Restraining unit (60) is installed detachably on top surface of side brackets (40) separated from restraining bumps (50) to prepare supporting groove that supports the other end of side rollers (13) to be restrained to top surface of side brackets (40) for rotation, and is furnished with insertion member (61), restraining member (60), and insertion block (63). Insertion member (61) is attached to restraining member (62) to be described later to attach and detach restraining member (62) in vertical direction about side brackets (40). It is desirable for insertion member (61) to have rectangular cross-section and be formed by extending in vertical direction. Restraining member (62) is welded and fixed onto top side surface of insertion member (61) and formed as rectangular cross-section. It is desirable for restraining member (62) to be settled on top surface of side brackets (40) and formed with width and size corresponding to restraining bumps (50) so as to provide 'U'-shaped groove supporting the other end of side rollers (13) along with restraining bumps (50). Insertion block (63) is fixed into top side surface of side brackets (40) separated rearward about restraining bumps (50). Through hole (64) that penetrates through insertion block (63) vertically is formed on top surface of insertion block (63) so that insertion member (61) can be inserted. When bottom of insertion member (61) is inserted into insertion block (63), restraining member (62) fixed onto top of insertion member (61) is settled on top surface of side brackets (40). The other end of side rollers (13) is inserted into space between restraining bumps (50) and restraining members (62) so that side rollers (13) are supported on side brackets (40) for rotation.

### [Contents of the Invention]

### [Technical Problem]

The conventional roller stand comprised as above can take side rollers out through side for repair by removing restraining member (62), but there is a problem of causing severe vibration during initial rotation because restraining bumps supporting rotation of roller axis can be separated from restraining member. The conventional roller stand comprised as above has a problem of not being able to adjust inclination angle of side rollers, and there is another problem of difficulty repairing side rollers. Belt conveyor system with easy maintenance of this invention to resolve the problems is intended to replace bottom roller easily. It is also intended to perform maintenance and replace impact bar installed on side easily, and to adjust inclination angle of side stand installed with impact bar easily.

### [Solution to Problem]

Belt conveyor stand system with easy maintenance of this invention with the purpose above comprises: 1st inclined stand unit comprising two triangular inclined stands that is installed at regular intervals on bottom of transporting conveyor belt, perpendicularly attaches many impact bars on one side of rear surface and opposite side separated by specific distance from one side, and maintains inclination angle from inner side to outer side; 2nd inclined stand unit comprising two inclined stands that is separated at regular intervals while facing the 1st inclined stand unit and is attached to base stand unit; base stand unit comprising two base stands attached to face the 1st inclined stand unit and the 2nd inclined stand unit; 1st roller unit attached to side of base stand on one side of the base stand unit; 2nd roller unit attached horizontally on side of base stand on opposite side of the base stand unit; and many impact bars installed on the 1st inclined stand unit and 2nd inclined stand unit.

### [Effects of the Invention]

Belt conveyor system with easy maintenance of this invention comprised as above can repair and replace roller easily by separating roller in transverse direction, and this invention has an effect of adjusting inclination angle of 1st inclined stand unit and 2nd inclined stand unit. Also, this invention can repair and replace impact bars easily by using space formed between impact bars and belt by loosening bolts attaching 1 st inclined stand unit and 1 st base stand unit and moving 1st inclined stand unit along slot hole.

### [Brief Description of the Drawings]

Fig. 1 is a block diagram of conventional conveyor roller stand.
Fig. 2 is an overall perspective view of belt conveyor system with easy maintenance of this invention.
Fig. 3 is a front block diagram of belt conveyor stand system with easy maintenance of this invention.
Fig. 4 is a right side block diagram of belt conveyor stand system with easy maintenance of this invention.
Fig. 5 is a left side block diagram of belt conveyor stand system with easy maintenance of this invention.
Fig. 6 is a block diagram with conveyor belt removed from belt conveyor stand system with easy maintenance of this invention.
Fig. 7 is an expanded block diagram of hinge switch unit applied to this invention.
Fig. 8 is a block diagram of closed cut-open unit of hinge switch unit applied to this invention.
Fig. 9 is a perspective view of impact bar applied to this invention.

### [Detailed Description of the Invention]

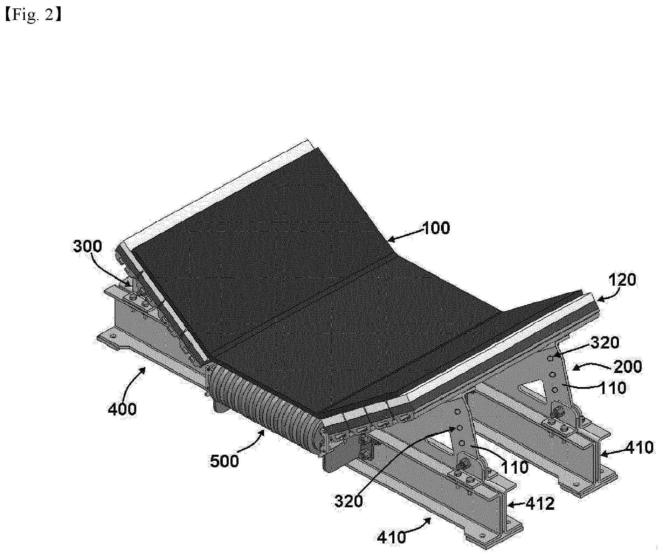

Belt conveyor stand system with easy maintenance of this invention with the purpose above explained based on Fig. 2 through 9 as below.

Fig. 2 is an overall perspective view of belt conveyor system with easy maintenance of this invention. In Fig. 2, belt conveyor stand system with easy maintenance of this invention comprises: 1st inclined stand unit (200) comprising two triangular inclined stands (110) that is installed at regular intervals on bottom of transporting conveyor belt (100), perpendicularly attaches many impact bars (120) on one side of rear surface and opposite side separated by specific distance from one side, and maintains inclination angle from inner side to outer side; 2nd inclined stand unit (300) that is separated at regular intervals from the 1st inclined stand unit and is attached to base stand unit; base stand unit (400) comprising two base stands (410) that attaches each of two inclined stands (110) of the 1st inclined stand unit (200) perpendicularly on one side and attaches each of two inclined stands (310) of the 2nd inclined stand unit (300) perpendicularly on opposite side; 1st roller unit (500) attached horizontally to side of base stand on one side of the base stand unit (400); 2nd roller unit (600) attached horizontally on side of base stand on opposite side of the base stand unit; and many impact bars (120) installed on the 1st inclined stand unit (200) and 2nd inclined stand unit (300).

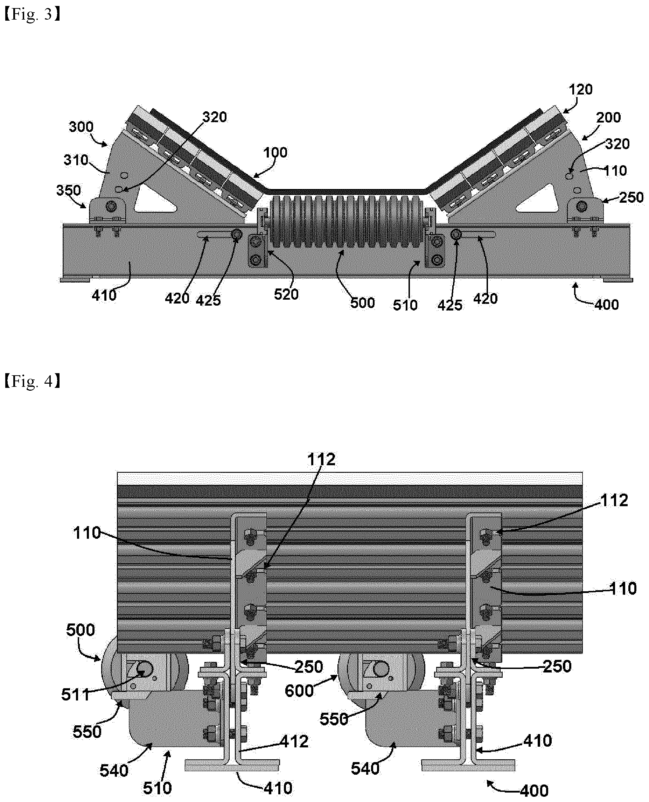

Fig. 3 is a front block diagram of belt conveyor stand system with easy maintenance of this invention. In Fig. 3, belt conveyor stand system with easy maintenance of this invention comprises: Base stand unit (400); 1st roller unit (500) and 2nd roller unit (600) each configured on side center of each base stand of the base stand unit (400); 1st inclined stand unit (200) attached on one side of the base stand unit; 2nd inclined stand unit (300) attached on opposite side of the base stand unit; and many impact bars (120) attached on inner inclined surface of 1st inclined stand unit (200) and 2nd inclined stand unit (300). In the above, each inclined stand of 1st inclined stand part (200) and 2nd inclined stand part (300) is formed with attachment hole (420) at regular intervals in vertical direction to adjust inclination angle of inclined stand units (200, 300) by changing attachment hole (320) attached to base stand (410). Four slot holes (420) formed on base stand (410) of base stand unit (400) perform function of buffering separation that can occur when attachment hole (320) is changed between the 1st and 2nd inclined stand units and base stand unit (400). Also, this structure has two attachment units (250) and two slot hole attachment units (425) attaching the base stand unit (400) and 1st inclined stand unit (200 and two attachment units (350) and two slot hole attachment units (425) to attach the base stand unit (400) and 2nd inclined stand unit (300). In the above, attachment units (250) and attachment units (350) have identical structure.

Fig. 4 is a right side block diagram of belt conveyor stand system with easy maintenance of this invention. In Fig. 4, base stand unit (400) and 1st inclined stand unit (200) applied to belt conveyor stand system with easy maintenance of this invention are attached using two attachment units (250) and two slot attachment units (425) attaching bottom of 1st inclined stand unit on one side of the base stand unit. Base stand unit and 2nd inclined stand unit are attached using two attachment units and two slot attachment units attaching bottom of 2nd inclined stand unit on opposite side of the base stand unit. The attachment units have identical structure where one bottom side of inclined stand unit (200) is placed in middle inside, "L"-shaped inclined brackets (252) are put over on both sides to face one another and attached to the triangular inclined stand unit (200) using bolts and nuts, and attachment units are attached to base stand (410) on one side of base stand unit (400) at bottom using bolts and nuts. Also, one slot attachment unit (425) among two slot attachment units (425) attaching 1st inclined stand unit and base stand unit comprises slot hole (420) formed on base stand (410) on one side of base stand unit (400) and bolts and nuts that penetrate through one bottom side of 1st inclined stand unit (200) inserted into internal groove where the base stand is formed on one side through the slot hole (420). The other slot attachment unit (425) also comprises slot hole (425) formed on base stand (410) on opposite side of base stand unit and bolts and nuts that penetrate through opposite bottom side of 1st inclined stand unit (200) inserted into internal groove where base stand is formed on opposite side. Also, two attachment units and two slot attachment units attaching the base stand unit and 2nd inclined stand unit have identical structure as attachment units and slot attachment units attaching the base stand unit and 1st inclined stand unit. The base stand unit has a structure where internal groove is formed by attaching long L-shaped bracket (412) in opposing direction and inserting bottom of the inclined stand (110) into the internal groove.

Also, 1st roller unit (500) attached to base stand (410) on one side of base stand unit (400) has a structure comprising one-side roller attachment unit (510) on one side of 1st roller unit and opposite-side roller attachment (520) on opposite side of the 1st roller unit. In the above, one-side roller attachment unit (510) and opposite-side roller attachment unit (520) have a structure comprising roller attachment member (540) attached to base stand (410) and hinge switch unit (550) attached to the roller attachment member. In the above, roller attachment member (540) comprises plate type body attached to one side of base stand using bolts and nuts. The hinge switch unit (550) comprises: Switch body (552) comprising two plates that is attached to plate type body (540), forms regular internal intervals so that rotation unit (555) can rotate between internal intervals, and can insert roller rotation axis (511) by forming cut-open unit on one side; rotation axis (557) that supports rotation unit (555) to rotate in internal intervals of the switch body (552) and is inserted into one side of switch body; rotation unit (555) that rotates inside switch body (552) by attaching one side to the rotation axis (557), forms key slot (553) that inserts "L"-shaped key (559), and forms rotating handle (558) for rotation; and "L"-shaped key (559) that penetrates through hole formed on switch body cover (552-1) combined with switch body to be inserted into key hole (552-2) formed on switch body (552) and then into key slot (553) on rotation unit to stop rotation of rotation unit. Also, the "L"-shaped key can be attached with spring on bent part of "L"-shaped key penetrating through key hole of switch body and hole formed on switch body cover, keeping "L"-shaped key inserted in key slot of rotation unit by using elastic force of spring. Hinge switch unit (550) comprised as above rotates rotation unit (555) clockwise around rotation axis (557), and rotation unit rotates downward according to dead weight to open cut-open unit formed on switch body (552). After inserting roller rotation axis (511) of roller unit through cut-open unit, rotation unit (555) is rotated counterclockwise to close cut-open unit. In this case, bent part of "L"-shaped key (559) is inserted into key slot (553) of rotation unit (555) using elastic force of spring (554) to stop rotation of rotation unit. Roller rotation axis of roller unit can rotate with cut-open unit closed. For repair, "L"-shaped key is pulled to remove "L"-shaped key from key slot (553) of rotation unit. Since rotation unit rotates clockwise around rotation axis (557) by dead weight, cut-open unit is opened again. Roller can be removed to replace or repair and reattached through the cut-open unit opened. In other words, this invention has a structure where roller can be removed or attached on bottom side of conveyor belt for replacement or repair without having to remove conveyor belt. Also, the inclined stand (110) has a structure where side slots (112) are formed at regular intervals to insert bolts from side into one side of bracket to attach impact bars (120). Bolts are inserted each on both sides through "T"-shaped groove (121-2) formed on 1st member (121) of impact bars, and each of the bolts is inserted through side slot (112) formed on inclined stand of inclined stand unit to be attached using nuts.

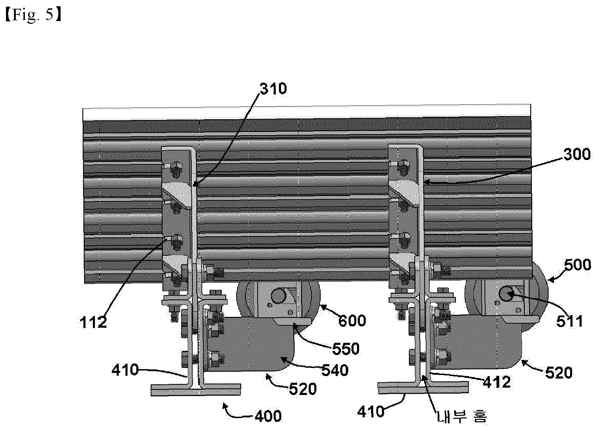

Fig. 5 is a left side block diagram of belt conveyor stand system with easy maintenance of this invention. In Fig. 5, left side of belt conveyor stand system with easy maintenance of this invention has identical structure as Fig. 4, viewed from opposite side of Fig. 4.

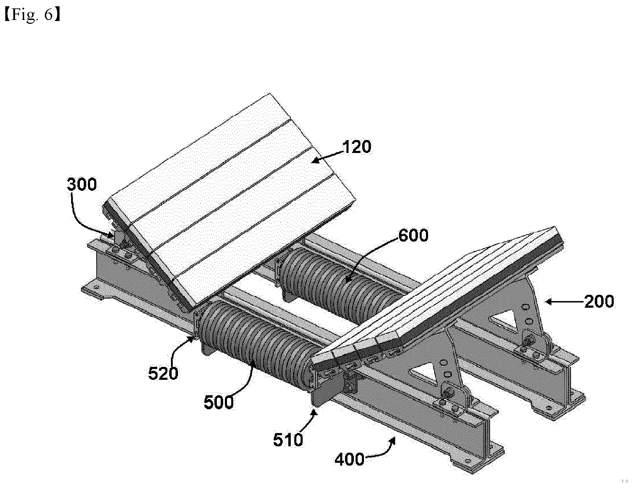

Fig. 6 is a block diagram with conveyor belt removed from belt conveyor stand system with easy maintenance of this invention. In Fig. 6, belt conveyor stand system with easy maintenance of this invention comprises: 1st inclined stand unit (200) installed to maintain a fixed angle; 2nd inclined stand unit (300) installed to face the 1st inclined stand unit, separated by a fixed distance; base stand unit (400) that attaches the 1st inclined stand unit on one side and attaches the 2nd inclined stand unit separated by a fixed distance from the 1st inclined stand unit on opposite side; 1st roller unit (500) attached to side of base stand on one side of the base stand unit; and 2nd roller unit (600) installed on side of base stand on opposite side installed in parallel, separated by a fixed distance from base stand on one side of the base stand unit. Also, the 1st inclined stand unit (200) and the 2nd inclined stand unit (300) have a structure where many impact bars (120) are installed on inner side. In the above, 1st inclined stand unit and 2nd inclined stand unit have identical structure but different attachment positions, and 1st roller unit and 2nd roller unit have identical structure but different attachment positions. Also, each inclined stand of 1st inclined stand unit and 2nd inclined stand unit have a structure where they are attached to base stand using identical method. Also, roller attachment unit (510) on one side of 1st roller unit (500) and roller attachment unit (520) on opposite side have identical structure. Roller attachment unit (510) on one side of 2nd roller unit (600) and roller attachment unit (520) on opposite side have identical attachment structure and operation mechanism.

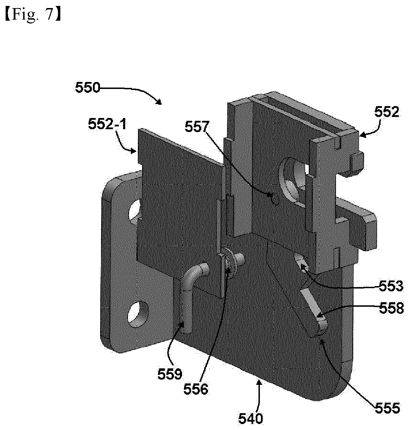

Fig. 7 is an expanded block diagram of hinge switch unit applied to this invention. In Fig. 7, hinge switch unit (550) applied to this invention comprises: Switch body (552) comprising two plates that is attached to plate type body (540) attached as one body on one side of base stand, forms regular internal intervals so that rotation unit (555) can rotate between internal intervals, and can insert roller rotation axis (511) by forming cut-open unit on one side; rotation axis (557) that supports rotation unit (555) to rotate in internal intervals of the switch body (552) and is inserted into one side of switch body; rotation unit (555) that rotates inside switch body (552) by attaching one side to the rotation axis (557), forms key slot (553) that inserts "L"-shaped key (559), and forms rotating handle (558) for rotation; and "L"-shaped key (559) that penetrates through hole formed on switch body cover (552-1) combined with switch body to be inserted into key hole (552-2) formed on switch body (552) and then into key slot (553) on rotation unit to stop rotation of rotation unit. Also, the "L"-shaped key (559) can be attached with spring (556) on bent part of "L"-shaped key penetrating through key hole (552-2) of switch body and hole formed on switch body cover, keeping "L"-shaped key (559) inserted in key slot (553) of rotation unit (555) by using elastic force of spring (556). Hinge switch unit (550) comprised as above rotates rotation unit (555) clockwise around rotation axis (557), and rotation unit rotates downward according to dead weight to open cut-open unit formed on switch body (552). After inserting roller rotation axis (511) of roller unit (500, 600) through cut-open unit, rotation unit (555) is rotated counterclockwise to close cut-open unit. In this case, bent part of "L"-shaped key (559) is inserted into key slot (553) of rotation unit (555) using elastic force of spring (556) to stop rotation of rotation unit. Roller rotation axis (511) of roller unit (500, 600) can rotate with cut-open unit closed. If roller is to be repaired, "L"-shaped key (559) is pulled to remove "L"-shaped key (559) from key slot (553) of rotation unit (555). Since rotation unit rotates clockwise around rotation axis (557) by dead weight, cut-open unit is opened again. Roller can be removed to replace or repair and reattached through the cut-open unit opened.

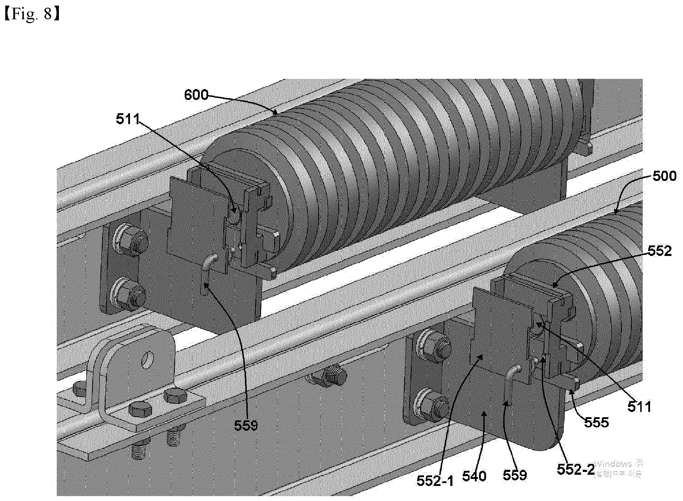

Fig. 8 is a block diagram of closed cut-open unit of hinge switch unit applied to this invention. In Fig. 8, hinge switch unit (550) attached as one body to plate type body (540) attached to base stand can insert roller rotation axis (511) of roller unit through cut-open unit of switch body (552), rotate rotation unit (555) counterclockwise, and insert "L"-shaped key (559) installed on switch body cover (552-1) through key hole (552-2) formed on switch body and then into key slot (553) of rotation unit.

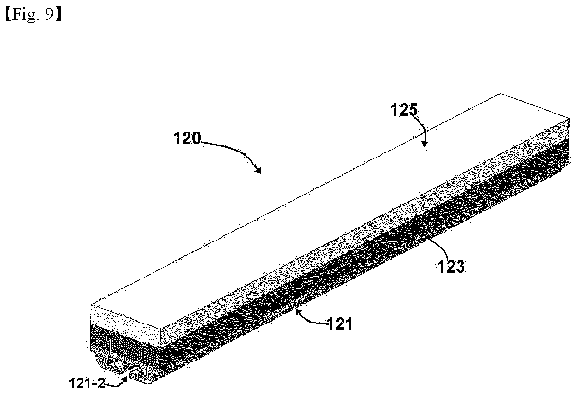

Fig. 9 is a perspective view of impact bar applied to this invention. In Fig. 9, impact bars applied to this invention are installed in many numbers side by side on inner side of 1st inclined stand unit and 2nd inclined stand unit. The impact bars (120) comprise: 1st member (121) that forms "T"-shaped groove (121-2) on cross-section to insert bolts; 2nd member (123) with rectangular shape attached to the 1st member; and 3rd member (125) attached to the 2nd member.

### [Description of Symbols]

| | |
|---|---|
| 100: Conveyor belt, | 200: 1st inclined stand unit, |
| 300: 2nd inclined stand unit, | 400: Base stand unit, |
| 500: 1st roller unit, | 550: Hinge switch unit, |
| 600: 2nd roller unit | |

## Claims

1. Belt conveyor stand system with easy maintenance comprises:
1st inclined stand unit (200) comprising two triangular inclined stands (110) that is installed at regular intervals on bottom of transporting conveyor belt (100), perpendicularly attaches many impact bars (120) on one side of rear surface and opposite side separated by specific distance from one side, and maintains inclination angle from inner side to outer side;
2nd inclined stand unit (300) that is separated at regular intervals from the 1st inclined stand unit and is attached to base stand unit;
base stand unit (400) comprising two base stands (410) that attaches each of two inclined stands (110) of the 1st inclined stand unit (200) perpendicularly on one side and attaches each of two inclined stands (310) of the 2nd inclined stand unit (300) perpendicularly on opposite side;
1st roller unit (500) attached horizontally to side of base stand on one side of the base stand unit (400);
2nd roller unit (600) attached horizontally on side of base stand on opposite side of the base stand unit;
and many impact bars (120) installed on the 1st inclined stand unit (200) and 2nd inclined stand unit (300).

2. The system of Claim 1,
wherein the base stand unit and 1st inclined stand unit (200) are attached by two attachment units (250) and two slot hole attachment units (425).

3. The system of Claim 1,
wherein the base stand and 1st roller unit are attached by one-side roller attachment unit and opposite-side roller attachment unit around roller, and
the roller attachment unit comprises roller attachment member (540) attached to base stand (410) and hinge switch unit (550) attached to the roller attachment member.

4. The system of Claim 1,
wherein the impact bars (120) comprise:
1st member (121) that forms "T"-shaped groove (121-2) on cross-section to insert bolts, 2nd member (123) with rectangular shape attached to the 1st member, and 3rd member (125) attached to the 2nd member.

5. The system of Claim 1,
wherein the belt conveyor stand system with easy maintenance is **characterized by** the following:
Each inclined stand of 1st inclined stand part (200) and 2nd inclined stand part (300) is formed with attachment hole (420) at regular intervals in vertical direction to adjust inclination angle of inclined stand units (200, 300) by changing attachment hole (320) attached to base stand (410); and four slot holes (420) formed on base stand (410) of base stand unit (400) perform function of buffering separation that can occur when attachment hole (320) is changed between the 1st and 2nd inclined stand units and base stand unit (400).

6. The system of Claim 2,
wherein the attachment unit (250) have a structure where:
"L"-shaped inclined brackets (252) are put over on both sides to face one another and attached to the triangular inclined stand unit (200) using bolts and nuts; and attachment units are attached to base stand (410) on one side of base stand unit (400) at bottom using bolts and nuts.

7. The system of Claim 3,
wherein the hinge switch unit (550) comprises:
Switch body (552) comprising two plates that is attached to plate type body (540), forms regular internal intervals so that rotation unit (555) can rotate between internal intervals, and can insert roller rotation axis (511) by forming cut-open unit on one side;
rotation axis (557) that supports rotation unit (555) to rotate in internal intervals of the switch body (552) and is inserted into one side of switch body;
rotation unit (555) that rotates inside switch body (552) by attaching one side to the rotation axis (557), forms key slot (553) that inserts "L"-shaped key (559), and forms rotating handle (558) for rotation;
and "L"-shaped key (559) that penetrates through hole formed on switch body cover (552-1) combined with switch body to be inserted into key hole (552-2) formed on switch body (552) and then into key slot (553) on rotation unit to stop rotation of rotation unit.

8. The system of Claim 7,
wherein the "L"-shaped key (559) can be attached with spring on bent part of "L"-shaped key penetrating through hole formed on switch body cover (552-1) and key hole (552-2) of switch body (552), keeping "L"-shaped key inserted in key slot (553) of rotation unit (555) by using elastic force of spring.
